# EUROPEAN PATENT APPLICATION

(11) **EP 4 566 886 A1**
(43) Date of publication of application: **11.06.2025**
(21) Application number: 23849928.9
(22) Date of filing: 21.07.2023
(51) Int. Cl.: B60Q 5/00, G08G 1/16, B60Q 1/26, B60Q 1/50, F21V 9/40, F21W 104/00, F21W 106/00, F21W 102/00, F21W 103/10, F21W 103/20, F21W 103/60

(54) **INFORMATION PROCESSING DEVICE, INFORMATION PROCESSING METHOD, AND ROAD SURFACE PROJECTION SYSTEM**

(30) Priority: 05.08.2022 JP 2022125306
(71) Applicant: Sony Group Corporation, Tokyo 108-0075 (JP)
(72) Inventor: NAGATA, Koji, Tokyo 108-0075 (JP); SUZUKI, Ryuichi, Tokyo 108-0075 (JP); MIYAO, Masa, Tokyo 108-0075 (JP); MORI, Keita, Tokyo 108-0075 (JP); HOMMA, Keisuke, Tokyo 108-0075 (JP); YAMAGUCHI, Kotoko, Tokyo 108-0075 (JP)
(74) Representative: Witte, Weller & Partner Patentanwälte mbB
(86) International application number: PCT/JP2023/026800
(87) International publication number: WO 2024/029373

(57) **Abstract**

The present technology relates to an information processing apparatus, an information processing method, and a road surface projection system that make it possible to allow the intuitive identification of the source of information.

A projection control unit controls an output of projection information, which is projected from a mobile body onto a road surface on which the mobile body travels, for communication with another entity. An addition control unit controls light emission of a light-emitting unit provided on the mobile body, as additional information presentation corresponding to the projection information. The present technology can be applied to vehicles configured to perform road surface projection, for example.

## Description

### [Technical Field]

The present technology relates to an information processing apparatus, an information processing method, and a road surface projection system, and in particular, to an information processing apparatus, an information processing method, and a road surface projection system that allow the intuitive identification of the source of information.

### [Background Art]

In recent years, there have been proposed many technologies that project information from a mobile body onto the road surface on which the mobile body travels, thereby achieving communication with surrounding traffic participants.

For example, PTL 1 discloses a vehicle display system configured to stop, in a situation where two vehicles projecting light patterns onto the road surface are present around each other, the light emission of the light patterns from the host vehicle in response to the detection of the light patterns emitted from the other vehicle.

### [Citation List]

### [Patent Literature]

PCT Patent Publication No. WO2020/031917

### [Summary]

### [Technical Problem]

However, it has not been considered to allow the intuitive identification of the source of projected information while multiple vehicles are traveling in a mixed manner or while images or the like are being projected onto the road surface also from roadside equipment.

The present technology has been made in view of such circumstances and is intended to allow the intuitive identification of the source of information.

### [Solution to Problem]

An information processing apparatus of the present technology is an information processing apparatus including: a projection control unit configured to control an output of projection information, which is projected from a mobile body onto a road surface on which the mobile body travels, for communication with another entity; and an addition control unit configured to control light emission of a light-emitting unit provided on the mobile body, as additional information presentation corresponding to the projection information.

An information processing method of the present technology is an information processing method including: by an information processing apparatus, controlling an output of projection information, which is projected from a mobile body onto a road surface on which the mobile body travels, for communication with another entity; and controlling light emission of a light-emitting unit provided on the mobile body, as additional information presentation corresponding to the projection information.

A road surface projection system of the present technology is a road surface projection system including: a light-emitting unit provided on a mobile body; a projection control unit configured to control an output of projection information, which is projected from the mobile body onto a road surface on which the mobile body travels, for communication with another entity; and an addition control unit configured to control light emission of the light-emitting unit, as additional information presentation corresponding to the projection information.

In the present technology, an output of projection information, which is projected from a mobile body onto a road surface on which the mobile body travels, for communication with another entity is controlled, and light emission of a light-emitting unit provided on the mobile body is controlled as additional information presentation corresponding to the projection information.

### [Brief Description of Drawings]

[FIG. 1]

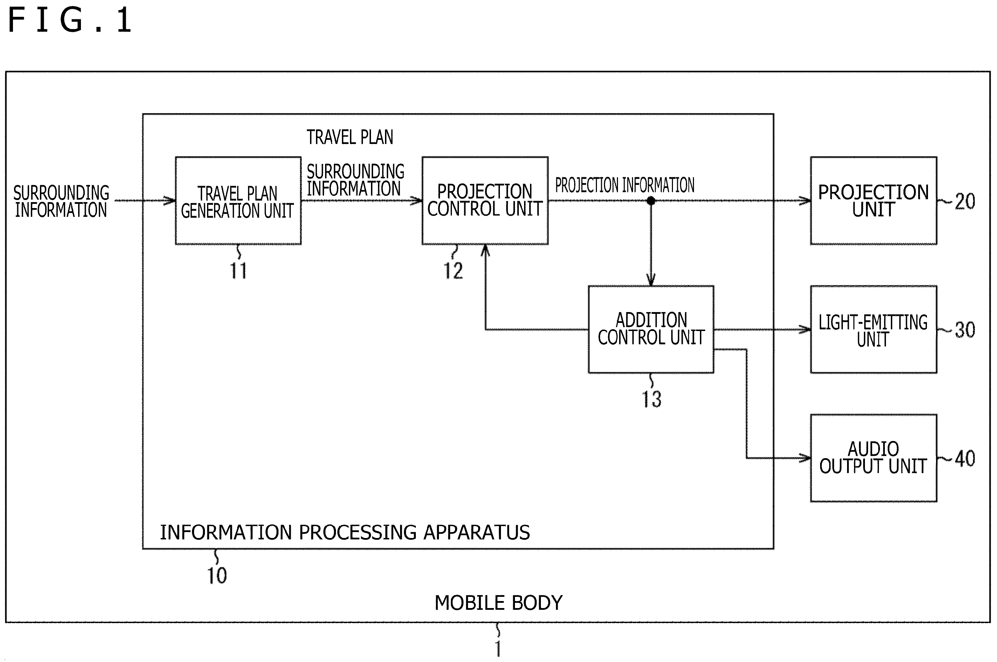

   FIG. 1 is a block diagram illustrating an overview of the configuration of a mobile body according to the present technology.
[FIG. 2]

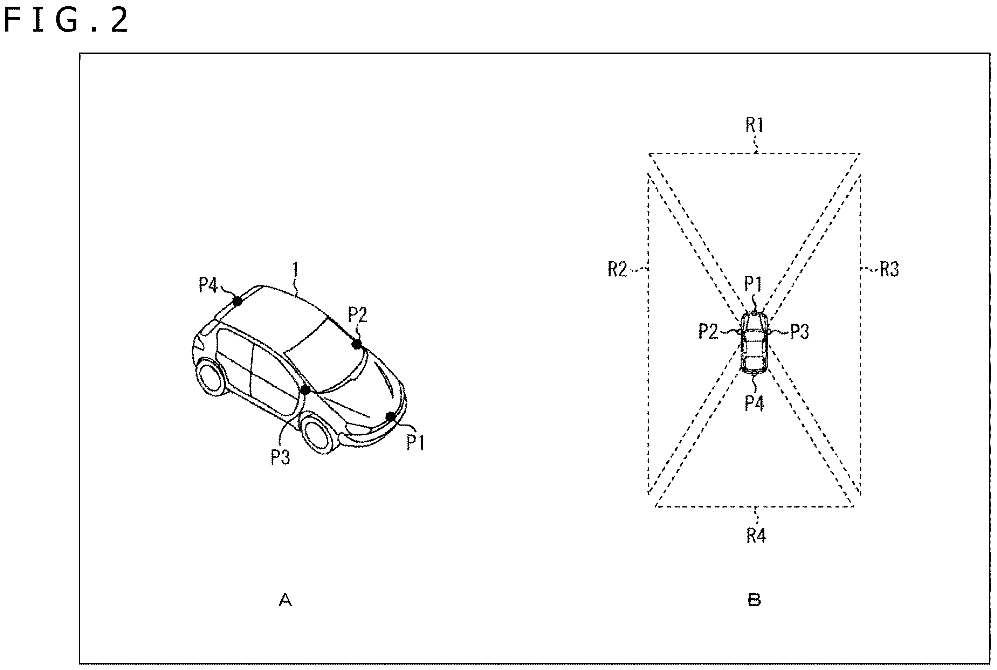

   FIG. 2 is a diagram illustrating an installation example of a projection unit and the projection range thereof.
[FIG. 3]

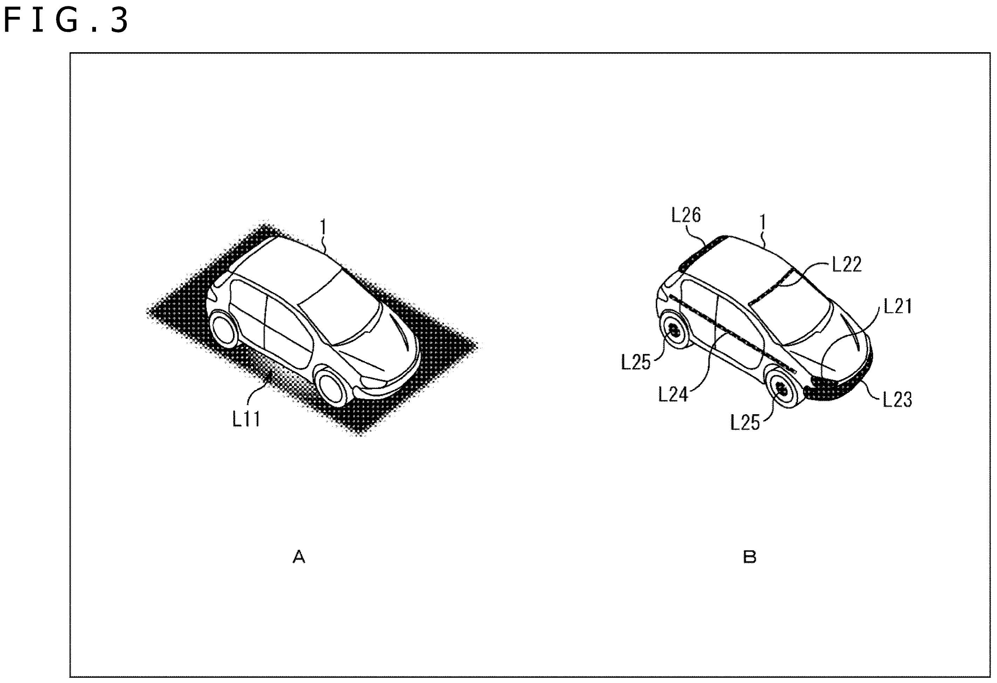

   FIG. 3 is a diagram illustrating an installation example of a light-emitting unit.
[FIG. 4]

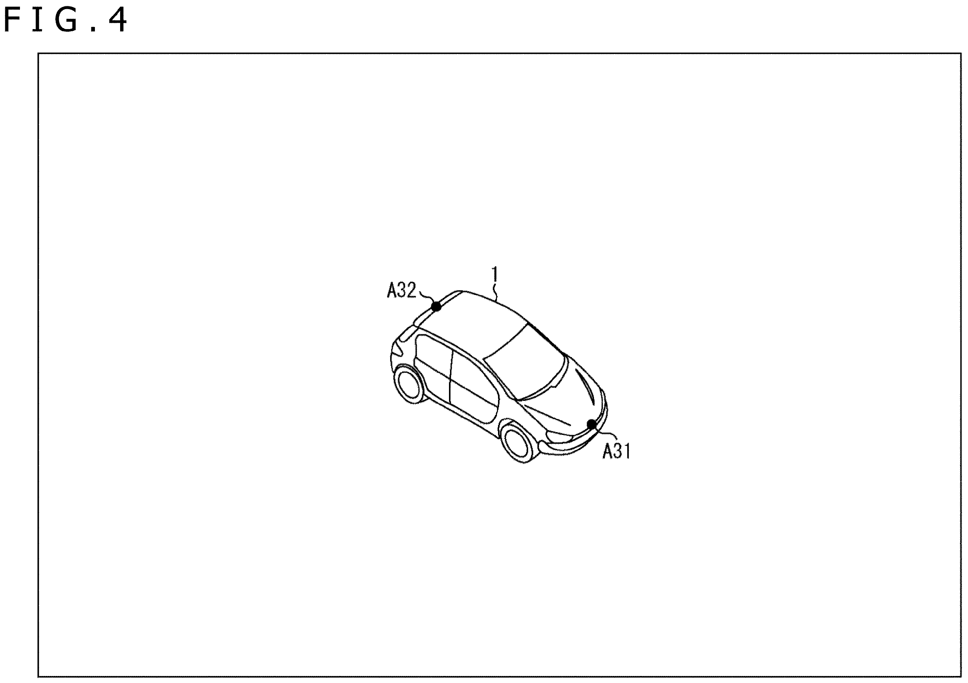

   FIG. 4 is a diagram illustrating an installation example of an audio output unit.
[FIG. 5]

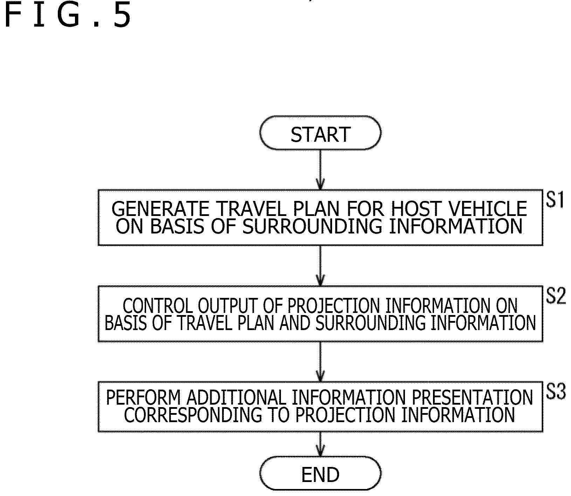

   FIG. 5 is a flowchart illustrating an overview of the operation of the mobile body.
[FIG. 6]

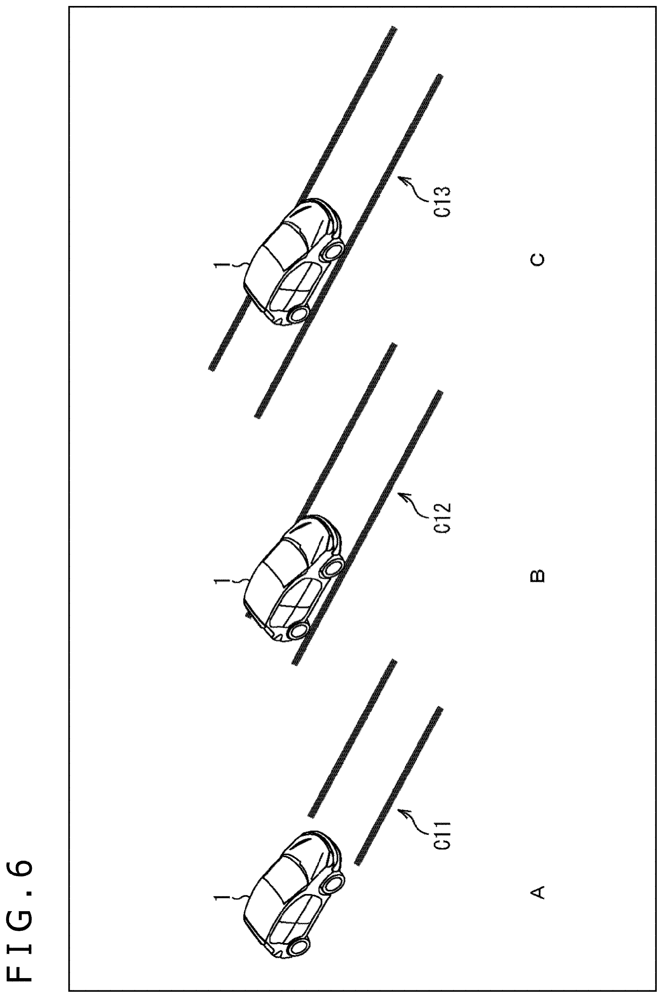

   FIG. 6 is a diagram illustrating an example of additional information presentation corresponding to projection information.
[FIG. 7]

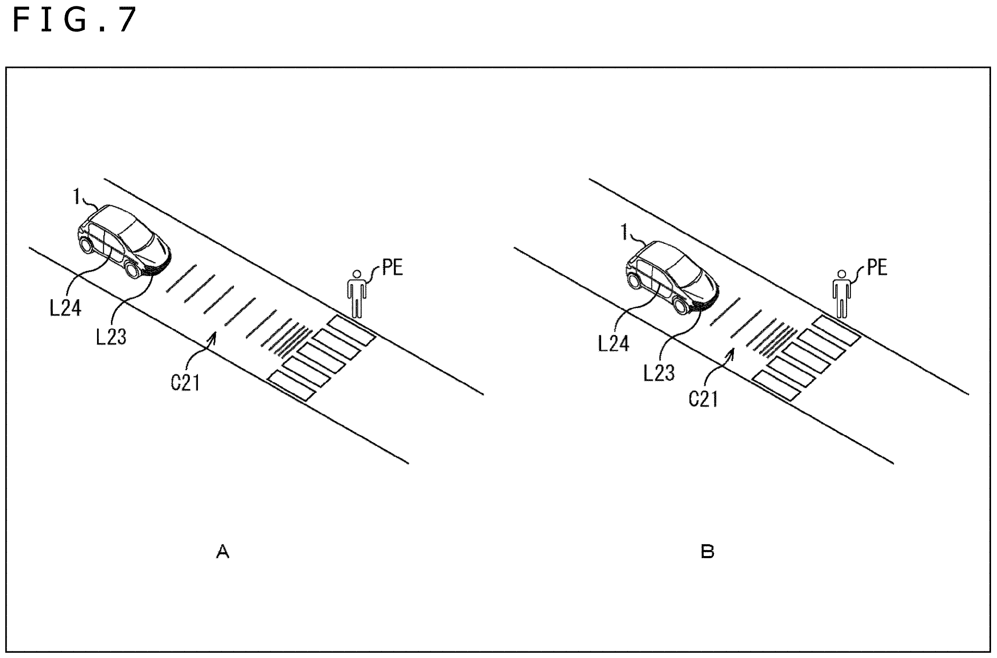

   FIG. 7 is a diagram illustrating an example of additional information presentation corresponding to projection information.
[FIG. 8]

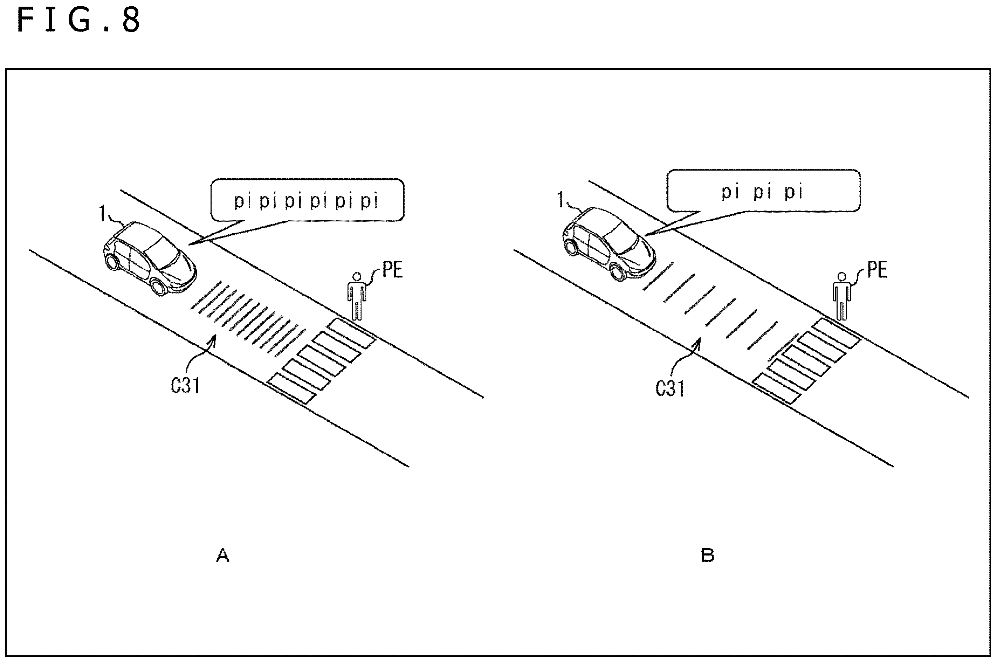

   FIG. 8 is a diagram illustrating an example of additional information presentation corresponding to projection information.
[FIG. 9]

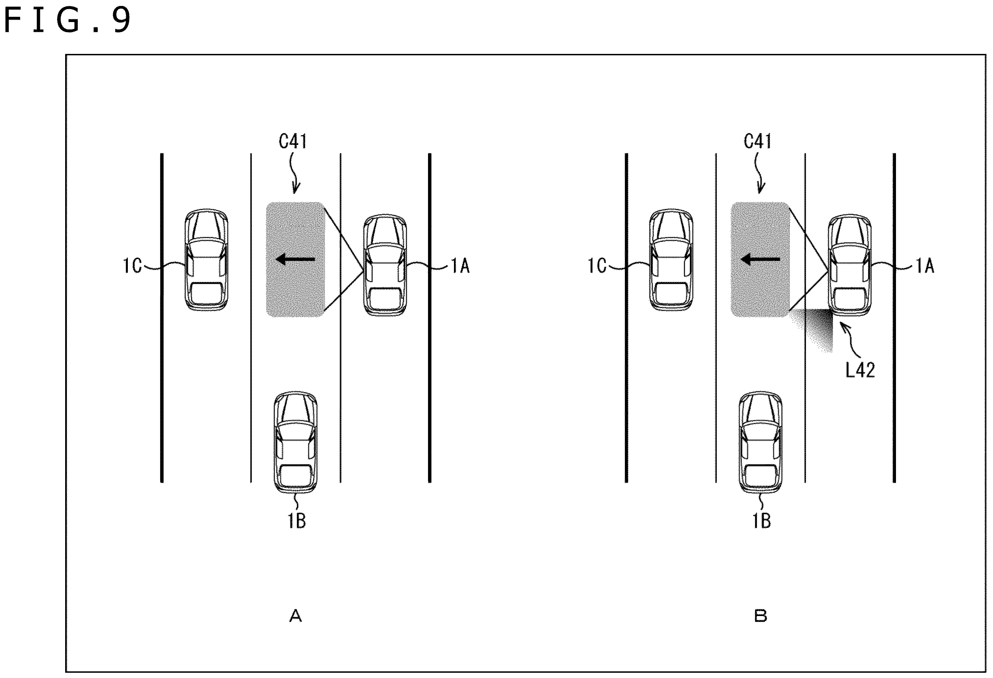

   FIG. 9 is a diagram illustrating a first example of road surface projection in a situation where multiple mobile bodies are present.
[FIG. 10]

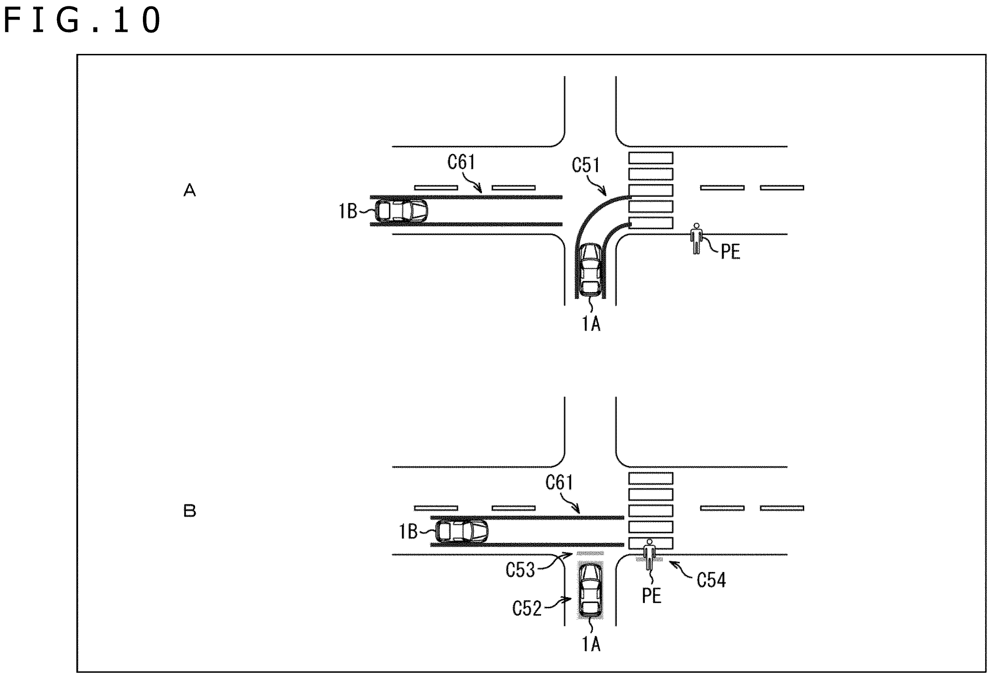

   FIG. 10 is a diagram illustrating a second example of road surface projection in a situation where multiple mobile bodies are present.
[FIG. 11]

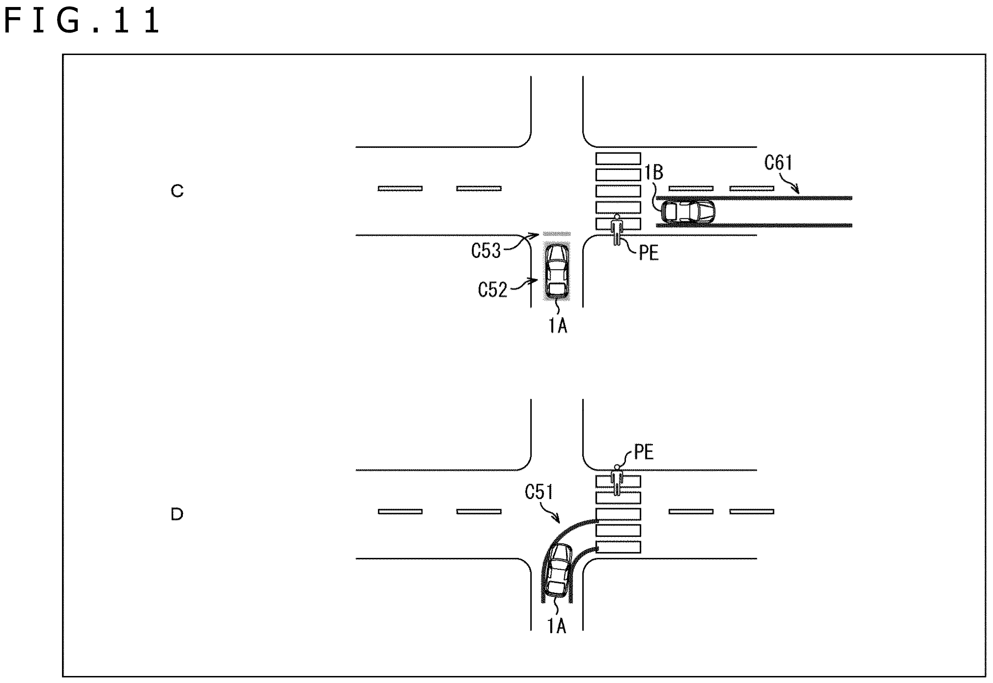

   FIG. 11 is a diagram illustrating the second example of road surface projection in a situation where multiple mobile bodies are present.
[FIG. 12]

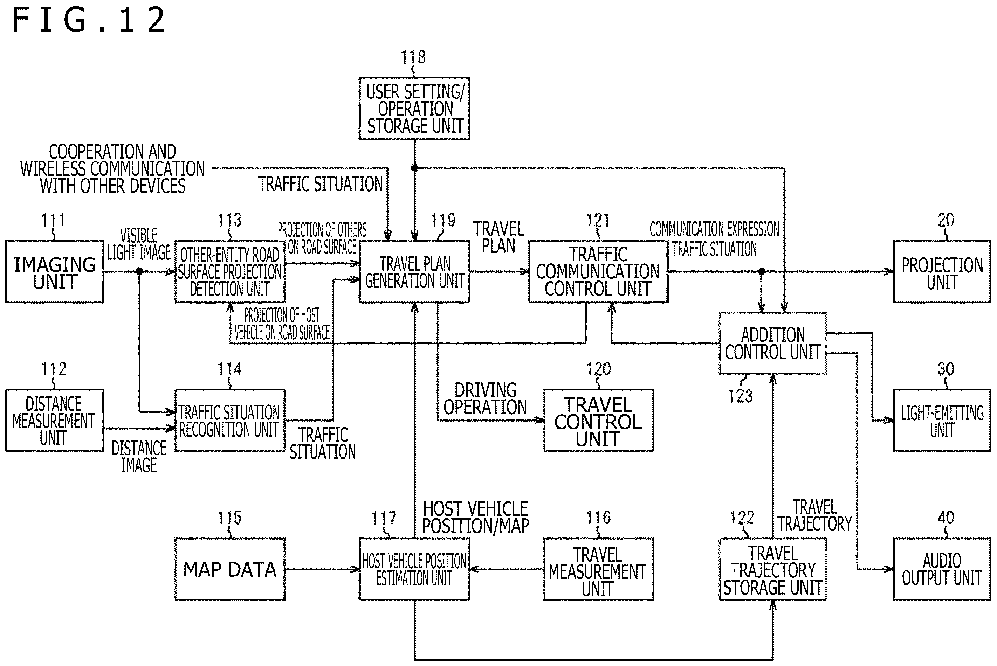

   FIG. 12 is a block diagram illustrating a specific example of the configuration of the mobile body.
[FIG. 13]

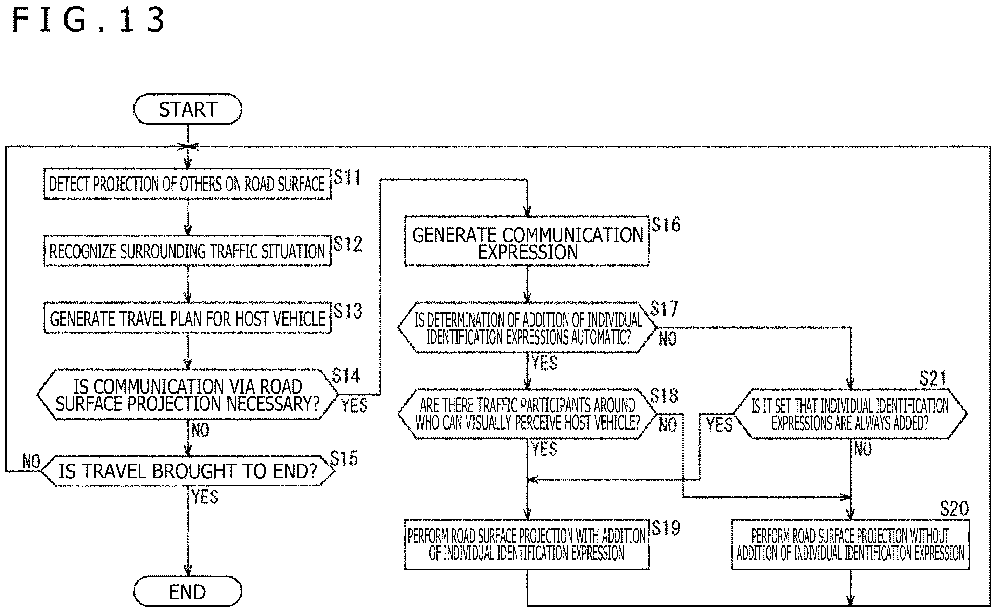

   FIG. 13 is a flowchart illustrating a flow of the road surface projection processing of the mobile body.
[FIG. 14]

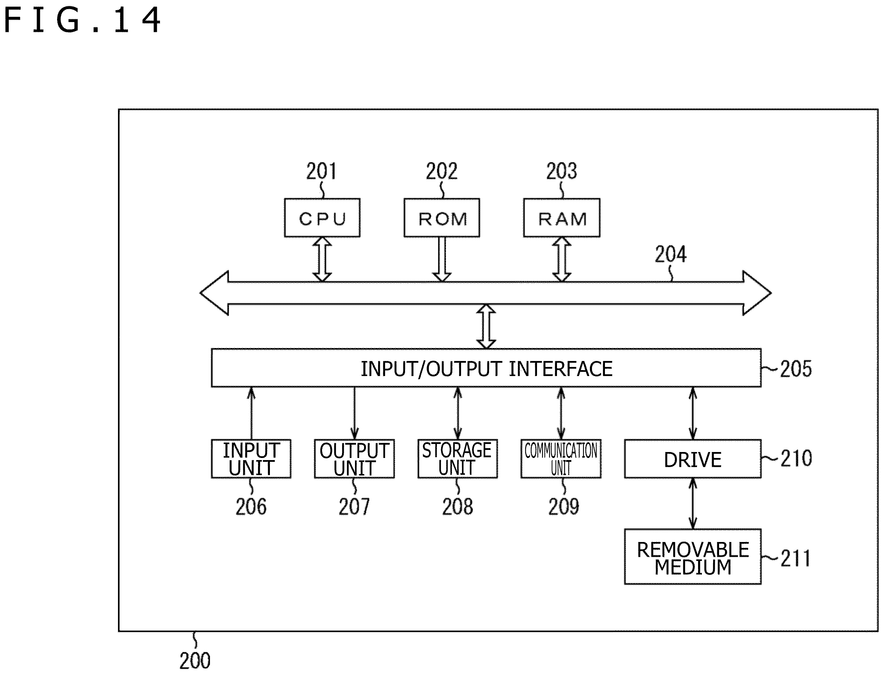

   FIG. 14 is a block diagram illustrating a configuration example of a computer.

### [Description of Embodiment]

Now, a mode for carrying out the present technology (hereinafter referred to as an "embodiment") is described. Note that the description is given in the following order.
1. Related Art and Problems Thereof
2. Overview of Configuration and Operation of Mobile Body According to Present Technology
3. Examples of Road Surface Projection in Situation Where Multiple Mobile Bodies Are Present
4. Specific Example of Configuration of Mobile Body and Road Surface Projection Processing
5. Configuration Example of Computer

### <1. Related Art and Problems Thereof>

Hitherto, as road surface projection apparatuses for vehicles, there have been known welcome lights (welcome lamps) for greeting the occupant when the door is opened or unlocked. A welcome light is mainly projected while the vehicle is being stopped, and the image thereof is also a fixed image. Further, most images projected onto the road surface from roadside equipment or the like have also been fixed images.

On the other hand, in recent years, there have been proposed many technologies that project information from a mobile body onto the road surface on which the mobile body travels, thereby achieving communication with surrounding traffic participants. In general road traffic, various traffic participants are present, and it has not been considered to allow the intuitive identification of the source of projected information while multiple vehicles are traveling in a mixed manner or while images or the like are being projected onto the road surface also from roadside equipment.

In the future, it is expected that dynamic images are projected onto the road surface to overlap with other projected images and images projected from traveling vehicles move along with the vehicles. As the amount of information projected onto the road surface increases in this manner, there is a demand for a technique for allowing the intuitive identification of the source of projected information.

In response to this, in the present technology, the output of projection information projected onto the road surface is controlled, and additional information presentation corresponding to the projection information is performed, thereby allowing the intuitive identification of the source of the information.

### <2. Overview of Configuration and Operation of Mobile Body According to Present Technology>

### (Configuration of Mobile Body)

FIG. 1 is a block diagram illustrating an overview of the configuration of a mobile body according to the present technology.

A mobile body 1 illustrated in FIG. 1 is configured as, for example, a vehicle (automobile) capable of autonomous driving. The mobile body 1 is not limited to this and may be configured as an autonomous mobile robot configured to move in public spaces.

The mobile body 1 includes an information processing apparatus 10, a projection unit 20, a light-emitting unit 30, and an audio output unit 40, and has a function as a road surface projection system configured to project projection information such as images onto the road surface on which the mobile body 1 travels.

The information processing apparatus 10 includes an ECU (Electronic Control Unit), other control units including dedicated processors, computers, and the like mounted on the mobile body 1.

The projection unit 20 includes, for example, a projection device such as a liquid crystal microdisplay. The projection unit 20 projects projection information such as images onto the road surface on which the mobile body 1 travels on the basis of the control of the information processing apparatus 10. The projection information projected by the projection unit 20 is presentation information for communication with others and includes displays of actions of the mobile body 1 (host vehicle), advance notices of actions of the host vehicle, promotion of actions of others, warnings to others, and the like.

The light-emitting unit 30 is a light-emitting apparatus provided on the mobile body 1 and includes vehicle lighting apparatuses (headlights, turn signals, tail lamps, and the like), decorative LED (Light Emitting Diode) tapes or LED illumination attached to the vehicle body, light-emitting emblems, lighting apparatuses provided inside the vehicle, and the like. The light-emitting unit 30 emits light on the basis of the control of the information processing apparatus 10.

The audio output unit 40 includes speakers provided on the vehicle body. The audio output unit 40 outputs audio on the basis of the control of the information processing apparatus 10.

The information processing apparatus 10 includes a travel plan generation unit 11, a projection control unit 12, and an addition control unit 13.

The travel plan generation unit 11 generates a travel plan including the travel route and waypoints of the mobile body 1, as well as travel speeds at each passing point, the destination, and the like, on the basis of surrounding information associated with the surroundings of the mobile body 1, and supplies the travel plan to the projection control unit 12 together with the surrounding information.

The surrounding information includes projection information projected onto the road surface on which the mobile body 1 travels by others (other-entity projection information), traffic situation information representing the traffic situation around the mobile body 1, and the like. The "others" here include other traffic participants (other vehicles and pedestrians) present around the mobile body 1, as well as smart poles and the like installed in public spaces.

The surrounding information is acquired on the basis of sensor information from various sensors, which are not illustrated, provided on the mobile body 1 and on the basis of information from devices capable of communicating with the mobile body 1.

The projection control unit 12 generates projection information on the basis of a travel plan and surrounding information from the travel plan generation unit 11 and controls the output of the projection information. In other words, the projection control unit 12 controls the projection unit 20 to cause the projection unit 20 to project projection information for communication with others onto the road surface.

The addition control unit 13 generates control information for performing additional information presentation corresponding to projection information generated by the projection control unit 12.

For example, the addition control unit 13 supplies the generated control information to the projection control unit 12 to add additional projection information indicating that the source of the projection information is the mobile body 1 to the projection information. Further, the addition control unit 13 supplies the generated control information to the light-emitting unit 30 to control the light emission of the light-emitting unit 30 to indicate that the source of the projection information is the mobile body 1. Moreover, the addition control unit 13 supplies the generated control information to the audio output unit 40 to control the audio output of the audio output unit 40 to indicate that the source of the projection information is the mobile body 1.

FIG. 2 is a diagram illustrating an installation example of the projection unit 20 and the projection range thereof.

As illustrated in A of FIG. 2, projection devices P1 to P4, each of which serves as the projection unit 20, are installed at the front end, left-side surface, right-side surface, and rear of the mobile body 1, respectively.

With this, as illustrated in B of FIG. 2, a front region R1, a left region R2, a right region R3, and a rear region R4 of the mobile body 1 correspond to the projection ranges of the projection devices P1 to P4, respectively. Note that, in B of FIG. 2, the front region R1, the left region R2, the right region R3, and the rear region R4 are illustrated with gaps between the corresponding adjacent projection ranges, but in reality, the front region R1, the left region R2, the right region R3, and the rear region R4 can be set to overlap with the corresponding adjacent projection ranges. That is, with the projection unit 20, it is possible to project projection information around the entire periphery of the mobile body 1.

FIG. 3 is a diagram illustrating an installation example of the light-emitting unit 30.

A of FIG. 3 illustrates an example where a light-emitting unit L11, which is not illustrated, is installed as an underglow neon on the lower part of the vehicle body of the mobile body 1. With this, the road surface directly below the mobile body 1, which includes the surroundings of the mobile body 1, is illuminated by the light emission of the light-emitting unit L11.

B of FIG. 3 illustrates an example where light-emitting units L21 to L26 are installed on respective parts of the vehicle body of the mobile body 1. In the example of B of FIG. 3, the light-emitting unit L21 includes headlights, and the light-emitting unit L22 includes an LED tape attached to the upper end of the front glass. The light-emitting unit L23 includes LED illumination provided on the bumper, and the light-emitting unit L24 includes LED tapes attached to the side surfaces of the vehicle body. The light-emitting unit L25 includes LED lights provided on the wheels of the front and rear tires, and the light-emitting unit L26 includes an LED tape attached to the rear spoiler. With this, it becomes possible to allow traffic participants around the mobile body 1 to visually recognize the light emission of at least any of the light-emitting units L21 to L26.

FIG. 4 is a diagram illustrating an installation example of the audio output unit 40.

FIG. 4 illustrates an example where audio output units A31 and A32, which include speakers, are installed at the front end and rear of the vehicle body of the mobile body 1, respectively. With this, it becomes possible to allow traffic participants in front of and behind the mobile body 1 to recognize audio.

### (Operation of Mobile Body)

Next, with reference to the flowchart of FIG. 5, an overview of the operation of the mobile body 1 (information processing apparatus 10) is described.

In Step S1, the travel plan generation unit 11 generates a travel plan for the mobile body 1 (host vehicle) on the basis of surrounding information associated with the surroundings of the mobile body 1.

In Step S2, the projection control unit 12 generates projection information on the basis of the travel plan generated by the travel plan generation unit 11 and the surrounding information and controls the output of the projection information.

In Step S3, the addition control unit 13 performs additional information presentation corresponding to the projection information.

### (Examples of Additional Information Presentation Corresponding to Projection Information)

Here, with reference to FIG. 6 to FIG. 8, examples of additional information presentation corresponding to projection information are described.

FIG. 6 is a diagram illustrating a first example of additional information presentation corresponding to projection information.

In A of FIG. 6, projection information C11 representing the future travel trajectory of the mobile body 1 is projected onto the road surface. The future travel trajectory can be calculated on the basis of the travel plan of the mobile body 1.

In B of FIG. 6, projection information C12, in which the present travel trajectory of the mobile body 1 is added to the future travel trajectory of the mobile body 1, is projected onto the road surface. The present travel trajectory can be calculated by performing the host vehicle position estimation of the mobile body 1, for example.

In C of FIG. 6, projection information C13, in which the past travel trajectory of the mobile body 1 is further added to the present and future travel trajectories of the mobile body 1, is projected onto the road surface. The past travel trajectory can be calculated by storing the host vehicle position of the mobile body 1, for example.

In this manner, the past, present, and future travel trajectories of the mobile body 1 are continuously projected such that the projected contents matches the trajectory on which the mobile body 1 has actually traveled, thereby making it possible to allow the intuitive identification of the source of the projected information from the perspective of others.

FIG. 7 is a diagram illustrating a second example of additional information presentation corresponding to projection information.

In each of A and B of FIG. 7, projection information C21 including light patterns extending in the traveling direction of the mobile body 1 is projected onto the road surface as projection information indicating the predicted course of the mobile body 1.

The projection information C21 includes multiple line patterns of a certain length orthogonal to the traveling direction of the mobile body 1 and arranged in the traveling direction of the mobile body 1. The spacing between the line patterns corresponds to the speed of the mobile body 1, and the line patterns become denser as the speed of the mobile body 1 approaches zero. In the example of FIG. 7, since the line pattern spacing of the projection information C21 becomes smaller toward the crosswalk where a pedestrian PE is located, the mobile body 1 is to stop before the crosswalk.

Further, in the example of FIG. 7, the light-emitting units L23 and L24 provided on the mobile body 1 emit light to create visual relevance to the projection information C21 projected onto the road surface.

Specifically, the light-emitting units L23 and L24 emit light to simulate the origin from which the light patterns of the projection information C21 extending in the traveling direction of the mobile body 1 extend. Moreover, the light-emitting units L23 and L24 may emit light of the same color as the light patterns of the projection information C21.

In this manner, the light patterns are projected as if the light emitted from the mobile body 1 transitions from the mobile body 1 to the road surface, thereby making it possible to allow the intuitive identification of the source of the projected information from the perspective of others.

FIG. 8 is a diagram illustrating a third example of additional information presentation corresponding to projection information.

In each of A and B of FIG. 8, as in A and B of FIG. 7, projection information C31 including light patterns extending in the traveling direction of the mobile body 1 is projected onto the road surface as projection information indicating the predicted course of the mobile body 1.

The projection information C31 includes multiple line patterns of a certain length orthogonal to the traveling direction of the mobile body 1 and arranged in the traveling direction of the mobile body 1. However, unlike the projection information C21 of FIG. 7, the spacing between the line patterns of the projection information C31 is equal spacing.

Further, in the example of FIG. 8, the audio output unit 40, which is not illustrated, provided on the mobile body 1 outputs audio in synchronization with visual changes in the projection information C31 projected onto the road surface.

Specifically, in A and B of FIG. 8, the spacings of the line patterns of the projection information C31 are different, and a beep "pi" is output at a rhythm corresponding to each spacing. Besides this, the beep "pi" may be output in synchronization with light-dark changes or hue changes in the projection information C31.

In this manner, the audio synchronized with the visual changes in the projection information projected onto the road surface is output, thereby making it possible to allow the intuitive identification of the source of the projected information from the perspective of others.

With the processing described above, additional information presentation corresponding to projection information projected from the mobile body 1 onto the road surface is performed. With this, it becomes possible to allow, even when the amount of information projected onto the road surface increases, the intuitive identification of the source of the projected information, and ultimately, it becomes possible to achieve more suitable communication with surrounding traffic participants.

### <3. Examples of Road Surface Projection in Situation Where Multiple Mobile Bodies Are Present>

Here, examples of road surface projection in a situation where multiple mobile bodies are present are described.

FIG. 9 is a diagram illustrating a first example of road surface projection in a situation where multiple mobile bodies are present.

In each of A and B of FIG. 9, three vehicles 1A, 1B, and 1C, which serve as mobile bodies, are traveling on a three-lane road. Specifically, the vehicle 1A is traveling in the right lane, the vehicle 1B is traveling in the center lane, and the vehicle 1C is traveling in the left lane. The vehicle 1A and the vehicle 1C are in a state of parallel travel in the respective lanes, while the vehicle 1B is in a state of traveling behind the vehicles 1A and 1C.

In A of FIG. 9, the vehicle 1A is about to change lanes to the center lane and is projecting projection information C41, which serves as a light pattern indicating lane change, in front of the vehicle 1B in the center lane. In the projection information C41, an arrow indicating the direction of lane change is flickering (or blinking) at a predetermined cycle. However, there is a possibility that a driver of the vehicle 1B cannot identify whether the projection information C41 has been projected from either the vehicle 1A or the vehicle 1C.

Therefore, as illustrated in B of FIG. 9, a light-emitting unit L42 provided on the rear of the vehicle 1A is caused to flicker (or blink) in synchronization with the flickering (or blinking) of the arrow of the projection information C41. With this, the driver of the vehicle 1B can intuitively identify that the projection information C41 has been projected from the vehicle 1A.

In this manner, in a situation where multiple vehicles are present, the light-emitting unit provided on the host vehicle is caused to emit light to create visual relevance to the projection information from the host vehicle, thereby enabling surrounding traffic participants to intuitively identify the source of the projection information.

FIG. 10 and FIG. 11 are diagrams illustrating a second example of road surface projection in a situation where multiple mobile bodies are present.

First, as illustrated in A of FIG. 10, the vehicle 1A is about to make a right turn from a non-priority road to a priority road at an intersection where no traffic light is provided. Projection information C51 representing the travel trajectory for turning right to the priority road is projected from the vehicle 1A. At this time, the vehicle 1B traveling on the priority road is approaching the intersection. Projection information C61 representing the travel trajectory for going straight on the priority road is projected from the vehicle 1B. Further, to the right of the vehicle 1A, the pedestrian PE who is about to cross a crosswalk provided on the priority road is present.

The vehicle 1A can detect the approach of the vehicle 1B by detecting the projection information C61 projected from the vehicle 1B and can detect the presence of the pedestrian PE by communicating with an information terminal possessed by the pedestrian PE.

In such a case, as illustrated in B of FIG. 10, the vehicle 1A projects projection information C52 and projection information C53, which are of a different color from the projection information C51, instead of the projection information C51. The projection information C52, which is a light pattern simulating a stop line, is projected in front of the vehicle 1A. The projection information C53 is projected onto the road surface directly below the vehicle 1A, which includes the surroundings of the vehicle 1A. With the projection information C52 and the projection information C53 being of the same color, it becomes easier to identify that the projection information C52 simulating the stop line is projected from the vehicle 1A.

Moreover, the vehicle 1A projects, as additional information presentation, projection information C54, which is a light pattern simulating a stop line, also in front of the pedestrian PE. With this, it is also possible to prompt the pedestrian PE to stop. With the projection information C54 also being of the same color as each of the projection information C52 and the projection information C53, the pedestrian PE can intuitively identify that the projection information C54 is projected from the vehicle 1A.

After that, as illustrated in C of FIG. 11, when the vehicle 1B has passed through the intersection, the vehicle 1A stops the projection of the projection information C54 in front of the pedestrian PE while continuing the projection of the projection information C52 and the projection information C53. With this, the pedestrian PE can safely cross the crosswalk in a state of recognizing that the vehicle 1A remains stopped.

Then, as illustrated in D of FIG. 11, when the pedestrian PE has passed through the intended travel path of the vehicle 1A, the vehicle 1A projects again the originally projected projection information C51, which represents the travel trajectory for turning right to the priority road, instead of the projection information C52 and the projection information C53.

In this manner, in a situation where multiple vehicles are present, the projection information is changed depending on the state around the host vehicle, thereby enabling surrounding traffic participants to intuitively identify the source of the projection information and easily understand the intention of the projected information.

### <4. Specific Example of Configuration of Mobile Body and Road Surface Projection Processing>

In the following, a specific example of the configuration of the mobile body 1 described above and the flow of the road surface projection processing that is executed by the mobile body 1 are described.

### (Specific Example of Configuration of Mobile Body)

FIG. 12 is a block diagram illustrating a specific example of the configuration of the mobile body 1.

The mobile body 1 of FIG. 12 includes an imaging unit 111, a distance measurement unit 112, an other-entity road surface projection detection unit 113, a traffic situation recognition unit 114, map data 115, a travel measurement unit 116, a host vehicle position estimation unit 117, a user setting/operation storage unit 118, a travel plan generation unit 119, and a travel control unit 120.

The imaging unit 111 includes a visible light camera configured to capture images of the surroundings of the mobile body 1. The imaging unit 111 supplies visible light images acquired by capturing images of the surroundings of the mobile body 1 to the other-entity road surface projection detection unit 113 and the traffic situation recognition unit 114.

The distance measurement unit 112 includes sensors capable of measuring distance, such as a ToF sensor or LiDAR (Light Detection and Ranging). The distance measurement unit 112 acquires a distance image representing the distance in the depth direction and supplies the distance image to the traffic situation recognition unit 114.

The other-entity road surface projection detection unit 113 detects other-entity projection information projected onto the road surface by others (other vehicles, pedestrians, smart poles, and the like) (hereinafter also referred to as "projection of others on road surface" or the like) on the basis of a distance image from the distance measurement unit 112. The other-entity projection information is supplied to the travel plan generation unit 119.

The traffic situation recognition unit 114 recognizes the traffic situation around the mobile body 1 (attributes, positions, movement directions, and movement speeds of others) on the basis of a visible light image from the imaging unit 111 and a distance image from the distance measurement unit 112. The traffic situation information representing the traffic situation around the mobile body 1 is supplied to the travel plan generation unit 119.

The map data 115 is map data regarding the area in which the mobile body 1 travels.

The travel measurement unit 116 measures travel data associated with the travel of the mobile body 1 (host vehicle), such as travel positions, travel speeds, acceleration, deceleration, and steering operation, and supplies the travel data to the host vehicle position estimation unit 117.

The host vehicle position estimation unit 117 estimates the position of the mobile body 1 (host vehicle) on the map data 115 on the basis of travel data from the travel measurement unit 116. The host vehicle position information representing the estimated position of the host vehicle is supplied to the travel plan generation unit 119.

The user setting/operation storage unit 118 stores setting information and operation information associated with the driving by the user (driver). The setting information and the operation information include, for example, mode information representing the autonomous driving mode of the mobile body 1. The setting information and the operation information stored in the user setting/operation storage unit 118 are appropriately read out by the travel plan generation unit 119.

The travel plan generation unit 119 corresponds to the travel plan generation unit 11 of FIG. 1. The travel plan generation unit 119 generates a travel plan for the mobile body 1 (host vehicle) on the basis of surrounding information including other-entity projection information from the other-entity road surface projection detection unit 113, traffic situation information from the traffic situation recognition unit 114, and host vehicle position information from the host vehicle position estimation unit 117.

Further, the travel plan generation unit 119 may generate a travel plan for the mobile body 1 using traffic situation information acquired by mutually cooperating and wirelessly communicating with other devices such as in-vehicle equipment mounted on other vehicles, information terminals possessed by pedestrians, and ITS (Intelligent Transport Systems) equipment such as smart poles. The travel plan generation unit 119 supplies driving operation information corresponding to the generated travel plan to the travel control unit 120.

The travel control unit 120 controls the autonomous driving of the mobile body 1 on the basis of driving operation information from the travel plan generation unit 119.

The mobile body 1 further includes a traffic communication control unit 121, a travel trajectory storage unit 122, and an addition control unit 123.

The traffic communication control unit 121 corresponds to the projection control unit 12 of FIG. 1. The traffic communication control unit 121 acquires a travel plan generated by the travel plan generation unit 119 and the surrounding information used in the generation of the travel plan. The traffic communication control unit 121 generates an expression for communication with others as projection information on the basis of the acquired travel plan. The traffic communication control unit 121 controls the projection unit 20 on the basis of the generated communication expression, thereby causing the projection unit 20 to project the communication expression onto the road surface. Further, the traffic communication control unit 121 supplies the generated communication expression and the traffic situation information included in the surrounding information from the travel plan generation unit 119 to the addition control unit 123.

The travel trajectory storage unit 122 sequentially acquires, from the host vehicle position estimation unit 117, host vehicle position information representing the position of the host vehicle estimated by the host vehicle position estimation unit 117 and stores the host vehicle position information as travel trajectory information regarding the mobile body 1 (host vehicle). The travel trajectory stored in the travel trajectory storage unit 122 is read out by the addition control unit 123 as needed.

The addition control unit 123 corresponds to the addition control unit 13 of FIG. 1. The addition control unit 123 controls, on the basis of a communication expression and traffic situation information from the traffic communication control unit 121, additional information presentation corresponding to the communication expression. In the following, information additionally presented in correspondence with a communication expression is referred to as an "individual identification expression."

For example, in a case where the future travel trajectory of the mobile body 1 is projected onto the road surface as a communication expression, the addition control unit 123 adds, to the future travel trajectory, the past and present travel trajectories based on the travel trajectory information read out from the travel trajectory storage unit 122 and feeds the thus obtained trajectory back to the traffic communication control unit 121. With this, it becomes possible to allow the intuitive identification of the source of the projected information from the perspective of others.

Further, in a case where a specific light pattern is projected as a communication expression, the addition control unit 123 controls the light emission of the light-emitting unit 30 by causing the light-emitting unit 30 to emit light of the same color as the projected light pattern, for example, thereby creating visual relevance to the projected light pattern. With this, it becomes possible to allow the intuitive identification of the source of the projected information from the perspective of others.

Moreover, in a case where a light pattern with visual changes is projected as a communication expression, the addition control unit 123 controls audio output from the audio output unit 40 in synchronization with the visual changes in the projected light pattern. For example, the addition control unit 123 controls audio output from the audio output unit 40 in synchronization with the flickering or blinking of the projected light pattern or controls audio output from the audio output unit 40 in synchronization with changes in the color of the projected light pattern. With this, it becomes possible to allow the intuitive identification of the source of the projected information from the perspective of others.

In this manner, it is considered that individual identification expressions may have various variations. Therefore, the presentation form of individual identification expressions can be selected depending on the equipment or settings of the mobile body 1, which serves as a vehicle, the preferences of the driver, and setting information or operation information stored in the user setting/operation storage unit 118.

Further, since the optimal presentation form of individual identification expressions also varies depending on the traffic situation around the mobile body 1 (host vehicle), the presentation form of individual identification expressions can be selected depending on the traffic situation around the mobile body 1 (host vehicle). For example, in a case where the travel speed of the mobile body 1 is relatively fast or in a case where a traffic participant that is a communication partner is another vehicle, additional information presentation by audio is unsuitable, and hence additional information presentation by light emission is selected.

Note that a projected communication expression (the projection of the host vehicle on the road surface) is fed back to the other-entity road surface projection detection unit 113. With this, the other-entity road surface projection detection unit 113 can detect the road surface projection of others projected onto the road surface while distinguishing it from the projection of the host vehicle on the road surface.

Moreover, although not illustrated, a communication expression whose projection has been adjusted (the projection of the host vehicle on the road surface) may be fed back to the travel control unit 120. In this case, the travel control unit 120 can modify the travel control of the mobile body 1 (host vehicle) on the basis of the projection of the host vehicle on the road surface.

### (Road Surface Projection Processing of Mobile Body)

Next, with reference to the flowchart of FIG. 13, the flow of the road surface projection processing of the mobile body 1 of FIG. 12 is described. The processing of FIG. 13 can be executed during the travel of the mobile body 1, for example.

In Step S11, the other-entity road surface projection detection unit 113 detects the projection of others on the road surface on the basis of a distance image acquired by the distance measurement unit 112.

In Step S12, the traffic situation recognition unit 114 recognizes the traffic situation around the mobile body 1 on the basis of a visible light image captured by the imaging unit 111 and the distance image acquired by the distance measurement unit 112.

In Step S13, the travel plan generation unit 119 generates a travel plan for the mobile body 1 (host vehicle) on the basis of the projection of others on the road surface, the surrounding traffic situation, and the host vehicle position, which serve as surrounding information.

In Step S14, the traffic communication control unit 121 determines whether communication via road surface projection is necessary or not on the basis of the travel plan generated by the travel plan generation unit 119, as well as the projection of others on the road surface and the surrounding traffic situation used in the generation of the travel plan.

In a case where it is determined in Step S14 that communication via road surface projection is not necessary, the processing proceeds to Step S15, and the travel control unit 120 determines whether to end the travel or not on the basis of the travel plan generated by the travel plan generation unit 119.

In a case where it is determined not to end the travel in Step S15, the processing returns to Step S11, and the subsequent processing is repeated.

On the other hand, in a case where it is determined to end the travel in Step S15, the mobile body 1 ends the travel, and the processing ends.

Meanwhile, in a case where it is determined in Step S14 that communication via road surface projection is necessary, the processing proceeds to Step S16.

In Step S16, the traffic communication control unit 121 generates a required communication expression on the basis of the travel plan generated by the travel plan generation unit 119.

In Step S17, the addition control unit 123 determines whether the determination of the addition of individual identification expressions (information additionally presented in correspondence with communication expressions) is automatic or not. Whether to determine the addition of individual identification expressions on the system side or not is determined from setting information stored in the user setting/operation storage unit 118.

In a case where it is determined in Step S17 that the determination of the addition of individual identification expressions is automatic, the processing proceeds to Step S18.

In Step S18, the addition control unit 123 determines whether there are traffic participants around who can visually perceive the mobile body 1 (host vehicle) or not on the basis of the traffic situation information. Here, it is also determined whether or not there is a possibility that there are traffic participants in blind spots who can visually perceive the mobile body 1 (host vehicle).

In a case where it is determined in Step S18 that there are traffic participants around who can visually perceive the mobile body 1 (host vehicle) or that there is a possibility that there are traffic participants in blind spots who can visually perceive the mobile body 1 (host vehicle), the processing proceeds to Step S19.

In Step S19, the addition control unit 123 adds an individual identification expression to the communication expression, and the traffic communication control unit 121 performs the road surface projection of the communication expression. After that, the processing returns to Step S11, and the subsequent processing is repeated.

On the other hand, in a case where it is determined in Step S18 that there are no traffic participants around who can visually perceive the mobile body 1 (host vehicle) and that there is no possibility that there are traffic participants in blind spots who can visually perceive the mobile body 1 (host vehicle), the processing proceeds to Step S20.

In Step S20, the addition control unit 123 does not add an individual identification expression to the communication expression, and the traffic communication control unit 121 performs the road surface projection of the communication expression. After that, the processing returns to Step S11, and the subsequent processing is repeated.

Meanwhile, in a case where it is determined in Step S17 that the determination of the addition of individual identification expressions is not automatic, the processing proceeds to Step S21.

In Step S21, the addition control unit 123 determines whether it is set that individual identification expressions are always added. Whether to always add individual identification expressions or not is also determined from the setting information stored in the user setting/operation storage unit 118.

In a case where it is determined in Step S21 that it is set that individual identification expressions are always added, in Step S19, an individual identification expression is added to the communication expression, and the road surface projection of the communication expression is performed.

Further, in a case where it is determined in Step S21 that it is not set that individual identification expressions are always added, in Step S20, an individual identification expression is not added to the communication expression, and the road surface projection of the communication expression is performed.

With the processing described above, additional information presentation corresponding to a communication expression projected from the mobile body onto the road surface is performed. With this, it becomes possible to allow, even when the amount of information projected onto the road surface increases, the intuitive identification of the source of the projected information, and ultimately, it becomes possible to achieve more suitable communication with surrounding traffic participants.

### <5. Configuration Example of Computer>

The series of processes described above can be executed by hardware or software. In a case where the series of processes is executed by software, a program configuring that software is installed on a computer incorporated in dedicated hardware, a general-purpose personal computer, or the like from a program recording medium.

FIG. 14 is a block diagram illustrating a configuration example of the hardware of a computer configured to execute the series of processes described above by the program.

The information processing apparatus 10 (mobile body 1) described above is achieved by a computer 200 having the configuration illustrated in FIG. 14.

A CPU 201, a ROM 202, and a RAM 203 are connected to each other through a bus 204.

An input-output interface 205 is further connected to the bus 204. The input-output interface 205 is connected to an input unit 206 including a keyboard, a mouse, or the like, and an output unit 207 including a display, a speaker, or the like. Further, the input-output interface 205 is connected to a storage unit 208 including a hard disk, a non-volatile memory, or the like, a communication unit 209 including a network interface or the like, and a drive 210 configured to drive a removable medium 211.

In the computer 200 configured as described above, for example, the CPU 201 loads the program stored in the storage unit 208 into the RAM 203 through the input-output interface 205 and the bus 204 and executes the program to perform the series of processes described above.

The program to be executed by the CPU 201 is provided by being recorded on the removable medium 211, for example, or via a wired or wireless transmission medium, such as a local area network, the Internet, or digital broadcasting, and is installed on the storage unit 208.

Note that the program to be executed by the computer 200 may be a program whose processes are performed chronologically in the order described herein or in parallel. Alternatively, the program may be a program whose processes are performed at necessary timing such as when the program is called.

The "system" herein means a set of multiple components (apparatuses, modules (parts), or the like), and it does not matter whether all the components are in the same housing or not. Therefore, multiple apparatuses accommodated in separate housings and connected to each other via a network, and a single apparatus including multiple modules accommodated in a single housing are both systems.

An embodiment of the present technology is not limited to that described above, and various modifications can be made without departing from the gist of the present technology.

Further, the effects described herein are merely exemplary and not limiting, and there may be other effects.

The present technology can also adopt configurations like the ones below.
(1) An information processing apparatus including:
   a projection control unit configured to control an output of projection information, which is projected from a mobile body onto a road surface on which the mobile body travels, for communication with another entity; and
   an addition control unit configured to control light emission of a light-emitting unit provided on the mobile body, as additional information presentation corresponding to the projection information.
(2) The information processing apparatus according to (1), in which the addition control unit controls the light emission of the light-emitting unit to create visual relevance to the projection information projected onto the road surface.
(3) The information processing apparatus according to (2), in which
   the projection control unit controls an output of a light pattern extending in a traveling direction of the mobile body, as the projection information, and
   the addition control unit controls the light emission of the light-emitting unit to simulate an origin from which the light pattern extends.
(4) The information processing apparatus according to (2), in which
   the projection control unit controls an output of a light pattern that flickers or blinks at a predetermined cycle, as the projection information, and
   the addition control unit controls the flickering or blinking of the light-emitting unit in synchronization with the light pattern.
(5) The information processing apparatus according to (2), in which the addition control unit controls the light emission of the light-emitting unit to achieve the same color as a light pattern projected onto the road surface as the projection information.
(6) The information processing apparatus according to any one of (1) to (5), in which the addition control unit controls the light emission of the light-emitting unit on the basis of traffic situation information representing a traffic situation around the mobile body.
(7) The information processing apparatus according to any one of (1) to (6), in which the addition control unit controls an audio output from an audio output unit provided on the mobile body in synchronization with a visual change in the projection information projected onto the road surface, as further additional information presentation corresponding to the projection information.
(8) The information processing apparatus according to (7), in which the visual change in the projection information includes flickering or blinking of a light pattern.
(9) The information processing apparatus according to (7), in which the visual change in the projection information includes a change in a color of a light pattern.
(10) The information processing apparatus according to any one of (1) to (9), in which
   the projection control unit controls an output of a future travel trajectory of the mobile body as the projection information, and
   the addition control unit adds present and past travel trajectories of the mobile body to the future travel trajectory of the mobile body, as further additional information presentation corresponding to the projection information.
(11) The information processing apparatus according to any one of (1) to (10), in which the projection control unit controls the output of the projection information on the basis of a travel plan of the mobile body and surrounding information associated with a surrounding of the mobile body.
(12) The information processing apparatus according to (11), in which the surrounding information includes the projection information projected onto the road surface by the other entity.
(13) The information processing apparatus according to (11), in which the surrounding information includes traffic situation information representing a traffic situation around the mobile body.
(14) The information processing apparatus according to any one of (1) to (13), in which the other entity includes another traffic participant present around the mobile body.
(15) An information processing method including:
   by an information processing apparatus,
   controlling an output of projection information, which is projected from a mobile body onto a road surface on which the mobile body travels, for communication with another entity; and
   controlling light emission of a light-emitting unit provided on the mobile body, as additional information presentation corresponding to the projection information.
(16) A road surface projection system including:
   a light-emitting unit provided on a mobile body;
   a projection control unit configured to control an output of projection information, which is projected from the mobile body onto a road surface on which the mobile body travels, for communication with another entity; and
   an addition control unit configured to control light emission of the light-emitting unit, as additional information presentation corresponding to the projection information.
(17) A program causing a computer to execute processes of:
   controlling an output of projection information, which is projected from a mobile body onto a road surface on which the mobile body travels, for communication with another entity; and
   controlling light emission of a light-emitting unit provided on the mobile body, as additional information presentation corresponding to the projection information.

### [Reference Signs List]

1: Mobile body
10: Information processing apparatus
11: Travel plan generation unit
12: Road surface condition detection unit
13: Projection control unit
111: Imaging unit
112: Distance measurement unit
113: Other-entity road surface projection detection unit
114: Traffic situation recognition unit
115: Map data
116: Travel measurement unit
117: Host vehicle position estimation unit
118: User setting/operation storage unit
119: Travel plan generation unit
120: Travel control unit
121: Traffic communication control unit
122: Travel trajectory storage unit
123: Addition control unit

## Claims

1. An information processing apparatus comprising:
a projection control unit configured to control an output of projection information, which is projected from a mobile body onto a road surface on which the mobile body travels, for communication with another entity; and
an addition control unit configured to control light emission of a light-emitting unit provided on the mobile body, as additional information presentation corresponding to the projection information.

2. The information processing apparatus according to claim 1, wherein the addition control unit controls the light emission of the light-emitting unit to create visual relevance to the projection information projected onto the road surface.

3. The information processing apparatus according to claim 2, wherein
the projection control unit controls an output of a light pattern extending in a traveling direction of the mobile body, as the projection information, and
the addition control unit controls the light emission of the light-emitting unit to simulate an origin from which the light pattern extends.

4. The information processing apparatus according to claim 2, wherein
the projection control unit controls an output of a light pattern that flickers or blinks at a predetermined cycle, as the projection information, and
the addition control unit controls the flickering or blinking of the light-emitting unit in synchronization with the light pattern.

5. The information processing apparatus according to claim 2, wherein the addition control unit controls the light emission of the light-emitting unit to achieve a same color as a light pattern projected onto the road surface as the projection information.

6. The information processing apparatus according to claim 1, wherein the addition control unit controls the light emission of the light-emitting unit on a basis of traffic situation information representing a traffic situation around the mobile body.

7. The information processing apparatus according to claim 1, wherein the addition control unit controls an audio output from an audio output unit provided on the mobile body in synchronization with a visual change in the projection information projected onto the road surface, as further additional information presentation corresponding to the projection information.

8. The information processing apparatus according to claim 7, wherein the visual change in the projection information includes flickering or blinking of a light pattern.

9. The information processing apparatus according to claim 7, wherein the visual change in the projection information includes a change in a color of a light pattern.

10. The information processing apparatus according to claim 1, wherein
the projection control unit controls an output of a future travel trajectory of the mobile body as the projection information, and
the addition control unit adds present and past travel trajectories of the mobile body to the future travel trajectory of the mobile body, as further additional information presentation corresponding to the projection information.

11. The information processing apparatus according to claim 1, wherein the projection control unit controls the output of the projection information on a basis of a travel plan of the mobile body and surrounding information associated with a surrounding of the mobile body.

12. The information processing apparatus according to claim 11, wherein the surrounding information includes the projection information projected onto the road surface by the other entity.

13. The information processing apparatus according to claim 11, wherein the surrounding information includes traffic situation information representing a traffic situation around the mobile body.

14. The information processing apparatus according to claim 1, wherein the other entity includes another traffic participant present around the mobile body.

15. An information processing method comprising:
by an information processing apparatus,
controlling an output of projection information, which is projected from a mobile body onto a road surface on which the mobile body travels, for communication with another entity; and
controlling light emission of a light-emitting unit provided on the mobile body, as additional information presentation corresponding to the projection information.

16. A road surface projection system comprising:
a light-emitting unit provided on a mobile body;
a projection control unit configured to control an output of projection information, which is projected from the mobile body onto a road surface on which the mobile body travels, for communication with another entity; and
an addition control unit configured to control light emission of the light-emitting unit, as additional information presentation corresponding to the projection information.
